# EUROPÄISCHE PATENTANMELDUNG

(11) **EP 1 295 766 A2**
(43) Veröffentlichungstag der Anmeldung: **26.03.2003**
(21) Anmeldenummer: 02020997.9
(22) Anmeldetag: 20.09.2002
(51) Int. Cl.: B60S 1/08

(54) **Sensoreinrichtung zur Erfassung der Benetzung einer Scheibe, insbesondere einer Kraftfahrzeugscheibe**

(30) Priorität: 25.09.2001 DE 10147176
(71) Anmelder: Hella KG Hueck & Co., 59552 Lippstadt (DE)
(72) Erfinder: Schulte, Michael, 33106 Paderborn (DE); Boehlau, Christian, 59557 Lippstadt (DE); Kühnau, Uwe, 59227 Ahlen (DE)

(57) **Zusammenfassung**

Es wird eine Sensoreinrichtung zur Erfassung der Benetzung einer Scheibe (5), insbesondere einer Kraftfahrzeugscheibe, beschrieben. Die Sensoreinrichtung besteht aus
- mindestens zwei lichtaussendenden Sendern (1,2), die jeweils über ein zugeordnetes Lichteinkoppelelement (1A, 2A), welche an die Scheibe (5) angekoppelt sind, die Senderstrahlung in die Scheibe (5) einkoppeln
- mindestens zwei Lichtauskoppelelementen (10A, 20A), welche an die Scheibe (5) angekoppelt sind und die Senderstrahlung auf mindestens zwei den Sendern (1,2) zugeordneten Empfängern (10,20) auskoppeln, wobei die Sender ((1,2) und Empfänger (10, 20) durch Projektion auf die Scheibe die Eckpunkte eines Trapezes bilden.

Erfindungsgemäß weist die Sensoreinrichtung mindestens einen weiteren Sender (3) mit einem zugeordneten Lichteinkoppelelement (3A) und mindestens einen zu dem zusätzlichen Sender (3) korrespondierenden Empfänger (30) auf, dem ein Lichtauskoppelelement (30A) zugeordnet ist, wobei der Sender (3) und der Empfänger (30A) bei einer Projektion auf die Scheibe (5) auf einer Linie angeordnet sind, die im wesentlichen parallel zur Grundlinie des Trapezes und zumindest teilweise innerhalb des Trapezes verläuft.

## Beschreibung

Die Erfindung bezieht sich auf eine Sensoreinrichtung zur Erfassung der Benetzung einer Scheibe, insbesondere einer Kraftfahrzeugscheibe mit mindestens zwei lichtaussendenden Sendern, die jeweils über ein zugeordnetes Lichteinkoppelelement, welche an die Scheibe angekoppelt sind, die Senderstrahlung in die Scheibe einkoppeln und mit mindestens zwei Lichtauskoppelelementen, welche an die Scheibe angekoppelt sind und die Senderstrahlung auf mindestens zwei den Sendern zugeordneten Empfängern auskoppeln. Dabei wird die Senderstrahlung unter dem Winkel der Totalreflexion in die Scheibe eingekoppelt, so daß die Senderstrahlung bei trockener Scheibe von der Scheibenaußenseite vollständig in Richtung auf den Empfänger zurückreflektiert wird. Bei einer mit Flüssigkeit benetzten Scheibe ist die Bedingung der Totalreflexion nicht mehr erfüllt, so daß die zum Empfänger reflektierte Strahlungsmenge abnimmt. Diese Abnahme der Strahlungsmenge wird als Signal zur Erfassung der Scheibenbenetzung genutzt, wodurch beispielsweise der Scheibenwischermotor eines Fahrzeuges angesteuert wird.

Eine derartige Sensoreinrichtung ist aus der WO 01/52626 A1 bekannt. Bei dieser Sensoreinrichtung bilden die beiden Sender und die beiden Empfänger durch Projektion auf die Scheibe die Eckpunkte eines Trapezes. Dabei sind die den Sendern zugeordneten Lichteinkoppelelemente derart ausgebildet, daß die Senderstrahlung jeweils in zwei verschiedene Richtungen auf beide Empfänger gerichtet wird, d.h. jeder der beiden Empfänger empfängt von beiden Sender die Senderstrahlung. Auf diese Weise werden mit nur zwei Sendern und zwei Empfängern vier Messstrecken ( = sensitive Flächen auf der Scheibenaußenseite) gebildet. Allerdings hat diese Sensoreinrichtung den Nachteil, daß beim Ausfall eines Sensor oder eines Empfängers zwei Messstrecken ausfallen.

Aufgabe der Erfindung ist es, die oben genannte Sensoreinrichtung in einfacher und platzsparender Weise um ein zusätzliches Sender-/Empfänger-Paar mit jeweils zugeordnetem Lichtein- und Auskoppelelement zu erweitern.

Diese Aufgabe wird gelöst, indem der zusätzliche Sender und der zusätzliche Empfänger bei einer Projektion auf die Scheibe auf einer Linie angeordnet sind, die im wesentlichen parallel zur Grundlinie des Trapezes der gattungsgemäßen Sensoreinrichtung und zumindest teilweise innerhalb des Trapezes verläuft. Auf diese Weise wird eine sehr kompakte Bauform erreicht, die es gestattet, die Sensoreinrichtung in einem zylindrischen Gehäuse mit kleinem Durchmesser unterzubringen.

Darüber hinaus kann bei dieser Sender- Empfängeranordnung in einfacher Weise bei kompakter Bauweise mindestens ein Lichtempfänger zur Detektion der Lichtverhältnisse außerhalb der Scheibe integriert werden. Der Lichtempfänger dient beispielsweise dazu bei einsetzender Dämmerung oder beim Einfahren in einen Tunnel automatisch das Fahrlicht eines Fahrzeuges einzuschalten.

Anhand der beigefügten Zeichnungen soll die Erfindung nachfolgend näher erläutert werden. Es zeigt:
- Figur 1: eine Draufsicht auf die Lichtein- und Auskoppelelemente der Sensoreinrichtung,
- Figur 2: eine perspektivische Ansicht der Sender- und Empfängeranordnung,
- Figur 3: eine perspektivische Ansicht des aufgeschnittenen Sensorgehäuses,
- Figur 4: eine schematische Darstellung der Sender- und Empfängeranordnung in einer ersten Ausführungsform,
- Figur 5: eine schematische Darstellung der Sender- und Empfängeranordnung in einer zweiten Ausführungsform,
- Figur 6: eine schematische Darstellung der Sender- und Empfängeranordnung in einer dritten Ausführungsform,
- Figur 7: eine schematische Darstellung der Sender- und Empfängeranordnung in einer vierten Ausführungsform,
- Figur 8: einen Schnitt durch die Sensoreinrichtung gemäß Linie A-A aus Figur 1,
- Figur 9: einen Schnitt durch die Sensoreinrichtung gemäß Linie B-B aus Figur 1,
- Figur 10: eine Draufsicht auf die Sender- und Empfängeranordnung.

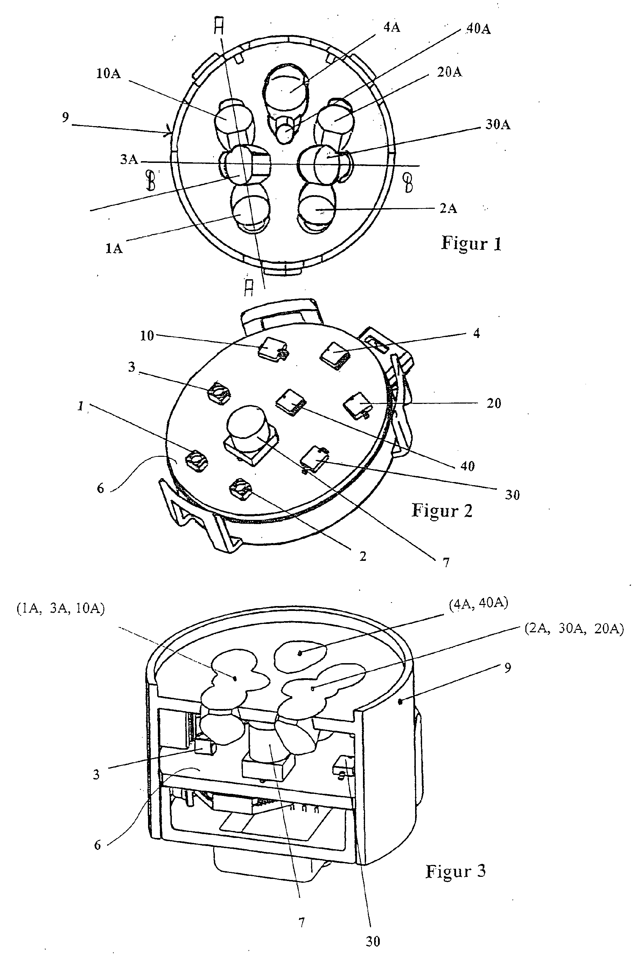

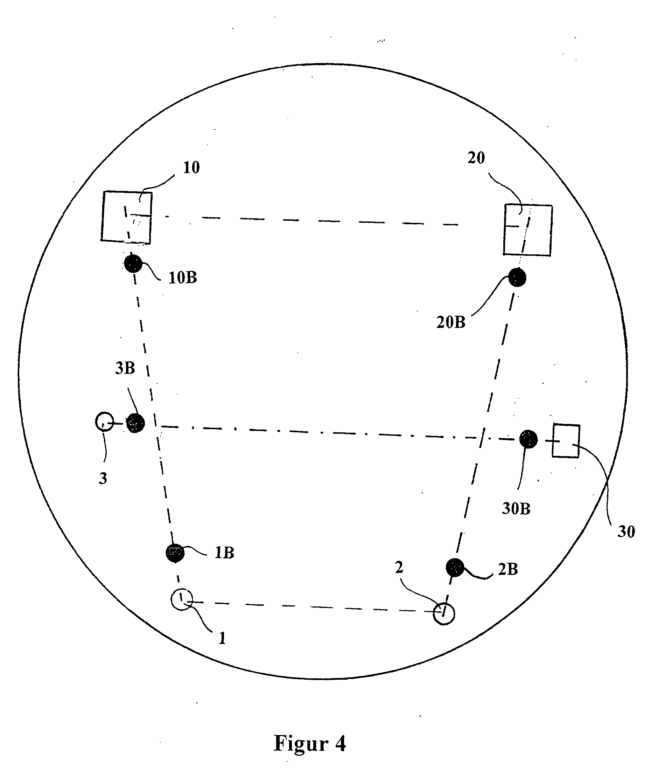

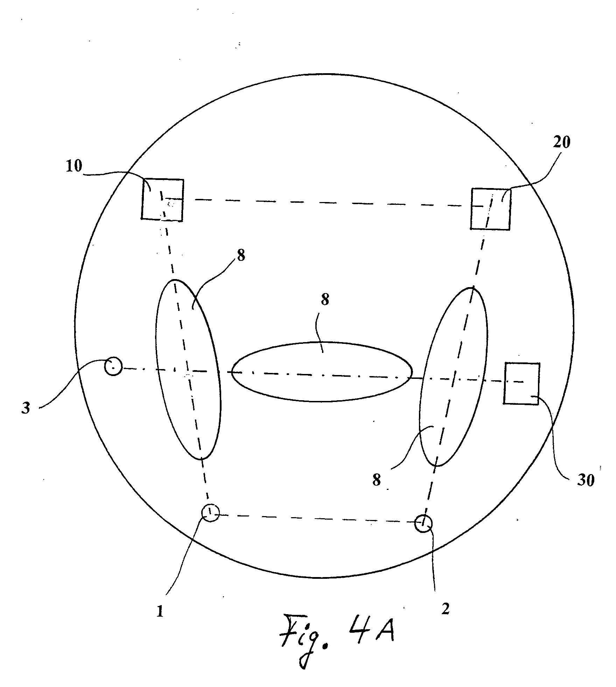

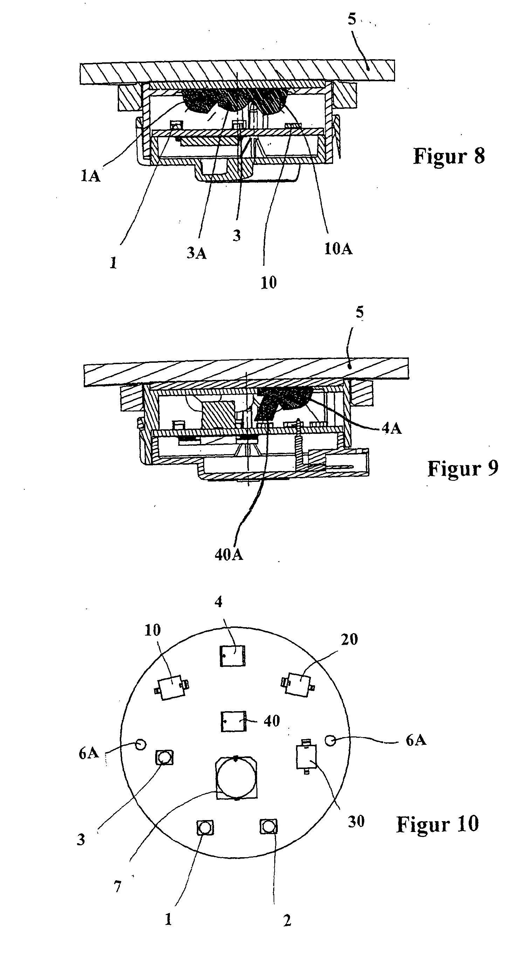

Figur 2 zeigt eine perspektivische Darstellung der Sender-Empfänger-Anordnung. In Figur 10 ist eine entsprechende Draufsicht dargestellt. Die Anordnung der Sender (1,2) und Empfänger (10, 20) der beiden ersten Sender-Empfänger-Paare ist derart, daß Sender und Empfänger bei einer Projektion auf die Scheibe (nicht dargestellt) die Eckpunkte eines gleichschenkligen Trapezes bilden. Die trapezförmige Anordnung ist auf den Figuren 4 bis 7 zur Verdeutlichung schematisch dargestellt, wobei ein Sensor-Empfänger-Paar (1, 10, 2, 20) jeweils symbolisch durch eine gestrichelte Linie miteinander verbunden ist. Das zusätzliche Sender-Empfänger-Paar (3, 30) ist nun erfindungsgemäß so angeordnet, daß der Sender (3) und der Empfänger (30) bei einer Projektion auf die Scheibe (5) auf einer Linie angeordnet sind, die im wesentlichen parallel zur Grundlinie des Trapezes und zumindest teilweise innerhalb des Trapezes verläuft. Das zusätzliche Sender-Empfänger-Paar (3, 30) ist zur Verdeutlichung auf den Figuren 4 bis 7 durch eine strichpunktierte Linie miteinander symbolisch verbunden. Durch diese Anordnung werden 3 voneinander völlig unabhängige Messstrecken zur Detektion der Scheibenbenetzung bei kompakter Bauweise realisiert. Die Messstrecken sind deshalb unabhängig voneinander, da die Strahlung eines Senders (1,2,3) über die Lichteinkoppel- und Auskoppelelemente (1A, 2A, 3A, 10A, 20A, 30A) immer nur einem Empfänger (10, 20, 30) zugeführt wird. Der Ausfall eines Senders oder Empfängers führt demnach nur zum Ausfall einer Messstrecke. Die den Messstrecken zugeordneten sensitiven Bereiche (8) auf der Scheibe (5) sind im wesentlichen ellipsenförmig und liegen dicht beieinander - wie in Figur 4A lediglich schematisch dargestellt. Dabei ist es in einer Ausführungsform auch vorgesehen, daß der sensitive Bereich des zusätzlichen Sender-Empfänger-Paares (3, 30) sich mit den angrenzenden sensitiven Bereichen überlappt.

In einer bevorzugten Ausführungsform sind die drei Messstrecken identisch ausgebildet, d.h. der Abstand (a) zwischen Sender und Empfänger und der Abstand zwischen dem zugeordneten Lichteinkoppelelement und dem Lichtauskoppelelement ist für alle drei Sender-Empfänger-Paare gleich. Dadurch wird die nachfolgende Auswertung der Empfängersignale der einzelnen Messstrecken wesentlich einfacher, da alle Signale gleichgewichtig sind.

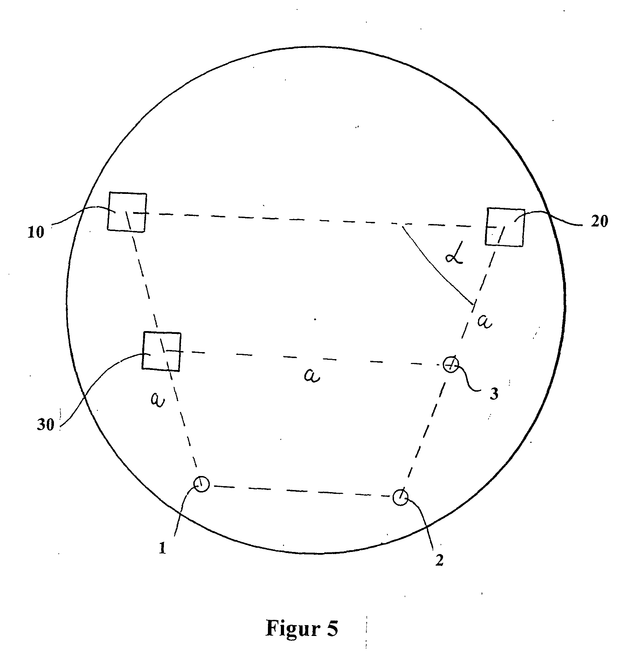

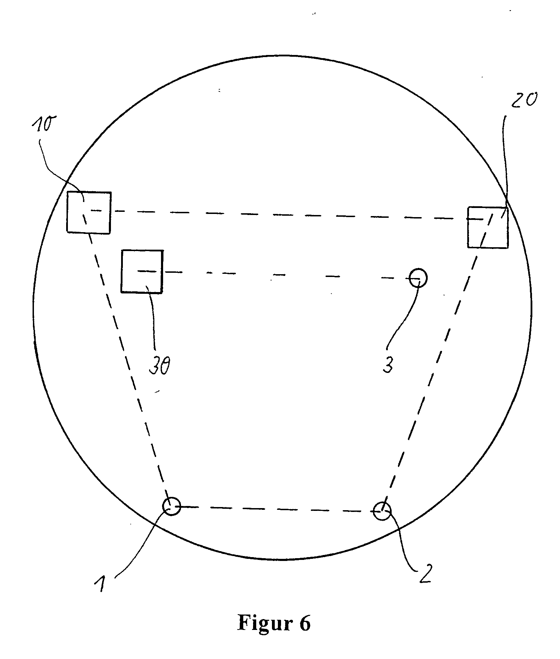

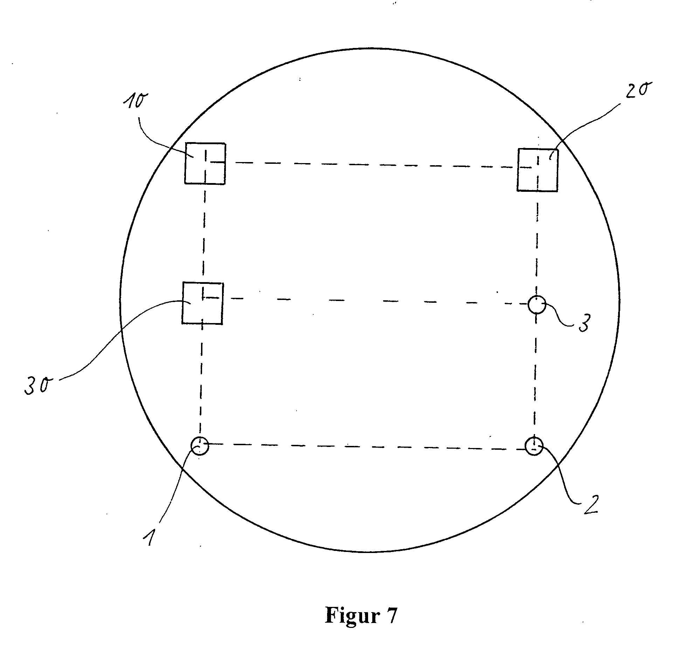

In der Ausführung gemäß Figur 4 und Figur 4A liegen der Sender (3) und der Empfänger (30) des zusätzlichen Sender-Empfänger-Paares in der Projektion etwas außerhalb des Trapezes. In der Ausführung gemäß Figur 5 liegen der Sender (3) und der Empfänger (30) des zusätzlichen Sender-Empfänger-Paares in der Projektion auf den Schenkeln des Trapezes. In der Ausführungsform gemäß Figur 6 liegen der Sender (3) und der Empfänger (30) des zusätzlichen Sender-Empfänger-Paares in der Projektion innerhalb des Trapezes. In Figur 7 ist eine Ausführungsform dargestellt, wo das Trapez im Grenzfall zu einem Quadrat entartet ist. In allen Ausführungsformen jedoch verläuft die Verbindungslinie zwischen dem zusätzlichen Sender-Empfänger-Paar (3, 30) im Wesentlichen parallel zur Grundlinie des Trapezes. In den dargestellten Ausführungsformen liegen die Sender (1,2) der beiden ersten Sender-Empfänger-Paare auf den Eckpunkten der längeren Trapez-Grundlinie, während die Empfänger (10, 20) auf den Eckpunkten der kürzeren Trapez-Grundlinie liegen. Der umgekehrte Fall ist jedoch auch vorgesehen. Darüber hinaus ist es vorgesehen (nicht dargestellt), daß der Sender des ersten Sender-Empfänger-Paares auf der längeren Trapezgrundlinie liegt und der zugehörige Empfänger auf der kürzeren Trapezgrundlinie, während der Sender des zweiten Sender-Empfänger-Paares auf der kürzeren Trapezgrundlinie liegt und der zugehörige Empfänger auf der längeren Trapezgrundlinie oder umgekehrt.

In einer bevorzugten Ausführungsform beträgt der Winkel (α) der Trapezschenkel mit der längeren Grundlinie zwischen 60° und 90°. Auf diese Weise wird im Bereich der längeren Trapezgrundlinie bei kompakter Bauweise Bauraum zur Aufnahme mindestens eines Lichtempfängers (4, 40) mit zugeordnetem Lichtleitelement (4a, 40A) geschaffen, der zur Detektion der Lichtverhältnisse außerhalb der Scheibe (5) dient. Dabei ist dieser Lichtempfänger (4, 40) samt seines Lichtleitelements (4A, 40A) im Bereich der längeren Trapezgrundlinie und zwischen den Eckpunkten des Trapezes angeordnet. Eine solche Sensoreinrichtung wird auch als integrierter Regen-/Lichtsensor bezeichnet. Dabei sind vorzugsweise zwei Lichtempfänger mit jeweils zugeordneten Lichtleitelementen vorgesehen und in der vorstehend beschriebenen Weise kompakt untergebracht. Dabei dient ein erster Lichtempfänger (4), der mit seinem Lichtleitelement (4A) im Wesentlichen in Fahrtrichtung des Fahrzeuges ausgerichtet ist, dazu die Lichtverhältnisse im Vorfeld des Fahrzeuges zu detektieren, während ein zweiter Lichtempfänger (40), der mit seinem Lichtleitelement (40A) unter einem Winkel zur Fahrtrichtung ausgerichtet ist, dazu dient als Globalsensor die Umgebungslichtverhältnisse zu detektieren.

Den Sendern (1,2,3) und Empfängern (10,20,30) ist - wie bereits vorstehend erwähnt jeweils eine Lichteinkoppelelement (1A, 2A, 3A) bzw. ein Lichtauskoppelelement (10A, 20A, 30A) zugeordnet. Zur Parallelisierung bzw. zur Sammlung der Senderstrahlung weist jedes Lichteinkoppelelement bzw. jedes Lichtauskoppelelement eine linsenförmig nach außen gewölbte Fläche auf (siehe Figur 8). Die Scheitelpunkte (1B, 2B, 3B, 10B, 20B, 30B) der Lichtein- und Auskoppelelemente liegen jeweils auf der Verbindungslinie zwischen einem Sender-Empfänger-Paar (siehe Figur 4). Damit bilden die Scheitelpunkte (1B, 2B, 10B, 20B) der Lichtein- und Auskoppelelemente der beiden ersten Sender-Empfänger-Paare (1, 10, 2, 20) in der Projektion ebenfalls wieder die Eckpunkte eines Trapezes.

Eine besonderes kompakte Bauweise wird erreicht, wenn die Lichteinkoppelelemente und die Lichtauskoppelelemente der verschiedenen Sender-Empfänger-Paare einstückig ineinander übergehen. Zu diesem Zweck ist das Lichteinkoppelelement (1A) und das Lichtauskoppelelement (10A) des ersten Sender-/Empfänger-Paares (1, 10) gemeinsam mit dem Lichteinkoppelelement (3A) oder dem Lichtauskoppelelement (30A) des zusätzlichen Sender-/Empfänger-Paares (3, 30) einstückig ausgebildet ist, wobei das Lichteinkoppelelement (3A) oder das Lichtauskoppelelement (30A) des zusätzlichen Sender/Empfänger-Paares (3, 30) zwischen dem Lichteinkoppelelement (1A) und dem Lichtauskoppelelement (10A) des ersten Sender-/Empfänger-Paares (1, 10) angeordnet ist. Dementsprechend ist das Lichteinkoppelelement (2A) und das Lichtauskoppelelement (20A) des zweiten Sender-/Empfänger-Paares (2, 20) gemeinsam mit dem Lichtauskoppelelement (30A) oder dem Lichteinkoppelelement (3A) des zusätzlichen Sender-/Empfänger-Paares (3, 30) einstückig ausgebildet ist, wobei.das Lichteinkoppelelement (3A) oder das Lichtauskoppelelement (30A) des zusätzlichen Sender-/Empfänger-Paares (3, 30) zwischen dem Lichteinkoppelelement (2A) und dem Lichtauskoppelelement (20A) des zweiten Sender/Empfänger-Paares (2, 20) angeordnet ist.

Die Lichteinkoppelelemente und die Lichtauskoppelelemente sind vorzugsweise einstückig im Spritzgießverfahren mit der Stirnwandung eines zylinderförmigen Gehäuseteils (9) ausgebildet, die an die Scheibe (5) angekoppelt wird. Dabei wird das zylindrische Gehäuse (9) samt Stirnwandung bis auf die Lichtein- und Auskoppelelemente (1A, 2A, 3A, 10A, 20A, 30A) aus einem für IR-Strahlung und für sichtbare Strahlung undurchlässigen Material abgespritzt, während die Lichtein- und Auskoppelelemente aus einem für die Senderstrahlung, vorzugsweise IR-Strahlung, transparenten Material bestehen. Vorzugsweise werden die Lichtleitelemente (4A, 40A) zur Detektion der Lichtverhältnisse außerhalb der Scheibe ebenfalls einstückig mit der Stirnwandung ausgebildet, wobei diese dann aus einem für sichtbares Licht transparenten Material gespritzt werden. Je nach Ausführungsform wird das zylinderförmige Gehäuseteil dann im 2- oder 3- Komponenten Spritzgießverfahren hergestellt.

Zur Aufnahme der die Sender (1,2,3) und Empfänger (10,20,30) für die Senderstrahlung sowie ggf. zur Aufnahme der Lichtempfänger (4,40) zur Detektion der Lichtverhältnisse außerhalb der Scheibe weist die Sensoreinrichtung eine Leiterplatte (6), die so in dem zylinderförmigen Gehäuseteil (9) fixiert wird, daß die Sender und Empfänger sowie die Lichtempfänger positionsgenau zu den Lichteinkoppelelementen, den Lichtauskoppelelementen und den Lichtleitelementen angeordnet sind. Zu diesem Zweck weist die Leiterplatte (6) zwei Positionierungslöcher (6A) auf, in die hinein zwei gehäuseseitige Positionierungsstifte eingesteckt werden.

Die trapezförmige Anordnung der Lichteinkoppel- und Auskoppelelemente bietet darüber hinaus in vorteilhafter Weise noch Platz zur Aufnahme mindestens eines relativ großvolumigen elektronischen Bauelements (7) , z.B. eines Kondensators, welcher auf der der Scheibe (5) zugewandten Seite der Leiterplatte (6) angeordnet ist.

## Patentansprüche

1. Sensoreinrichtung zur Erfassung der Benetzung einer Scheibe (5), insbesondere einer Kraftfahrzeugscheibe mit
- mindestens zwei lichtaussendenden Sendern (1,2), die jeweils über ein zugeordnetes Lichteinkoppelelement (1A, 2A), welche an die Scheibe (5) angekoppelt sind, die Senderstrahlung in die Scheibe (5) einkoppeln
- mindestens zwei Lichtauskoppelelementen (10A, 20A), welche an die Scheibe (5) angekoppelt sind und die Senderstrahlung auf mindestens zwei den Sendern (1,2) zugeordneten Empfängern (10,20) auskoppeln, wobei die Sender ((1,2) und Empfänger (10, 20) durch Projektion auf die Scheibe die Eckpunkte eines Trapezes bilden,
**gekennzeichnet, durch**
mindestens einen weiteren Sender (3) mit einem zugeordneten Lichteinkoppelelement (3A) und mindestens einen zu dem zusätzlichen Sender (3) korrespondierenden Empfänger (30), dem ein Lichtauskoppelelement (30A) zugeordnet ist, wobei der Sender (3) und der Empfänger (30A) bei einer Projektion auf die Scheibe (5) auf einer Linie angeordnet sind, die im wesentlichen parallel zur Grundlinie des Trapezes und zumindest teilweise innerhalb des Trapezes verläuft.

2. Sensoreinrichtung nach Anspruch 1,
**dadurch gekennzeichnet, daß**
die Lichteinkoppelelemente (1A, 2A, 3A) und die Lichtauskoppelelemente (10A, 20A, 30A) jeweils eine linsenförmig nach außen gewölbte Fläche zur Sammlung bzw. Parallelisierung der Senderstrahlung aufweisen, wobei
die Scheitelpunkte (1B, 2B, 10B, 20B) der Lichteinkoppelelemente und der Lichtauskoppelelemente der beiden ersten Sender (1,2) und Empfänger (10, 20) durch Projektion auf die Scheibe auf den Schenkeln des Trapezes angeordnet sind,
wobei die Scheitelpunkte (3B, 30B) des Lichteinkoppelelementes und des Lichtauskoppelelementes des zusätzlichen Sender-/Empfänger-Paares (3,30) durch Projektion auf die Scheibe auf der projizierten Sender-Empfänger-Linie angeordnet sind.

3. Sensoreinrichtung nach Anspruch 1 oder 2,
**dadurch gekennzeichnet, daß**
das Trapez ein gleichschenkliges Trapez ist, wobei der Winkel der Schenkel mit der längeren Grundlinie zwischen 60° und 90° beträgt.

4. Sensoreinrichtung nach einem der vorstehenden Ansprüche,
**dadurch gekennzeichnet, daß**
dieselbe mindestens einen Lichtempfänger (4, 40) mit zugeordnetem Lichtleitelement (4A, 40A) zur Detektion der Lichtverhältnisse außerhalb der Scheibe aufweist, wobei dieser Lichtempfänger durch Projektion auf die Scheibe im Bereich der längeren Grundlinie des Trapezes zwischen den Eckpunkten des Trapezes angeordnet ist.

5. Sensoreinrichtung nach Anspruch 4,
**dadurch gekennzeichnet, daß**
dieselbe einen Lichtempfänger (4) aufweist, der mit seinem Lichtleitelement (4A) im Wesentlichen in Fahrtrichtung des Fahrzeuges ausgerichtet ist.

6. Sensoreinrichtung nach Anspruch 4 oder 5,
**dadurch gekennzeichnet, daß**
dieselbe einen Lichtempfänger (40) aufweist, der mit seinem Lichtleitelement (40A) zur Erfassung der Umgebungslichtverhältnisse unter einem Winkel zur Fahrtrichtung des Fahrzeuges ausgerichtet ist.

7. Sensoreinrichtung nach einem der vorstehenden Ansprüche,
**dadurch gekennzeichnet, daß**
dieselbe eine elektrisches Bauelement (7) aufweist, das in der Projektion auf die Scheibe innerhalb des Trapezes und zwischen den Lichtein- und Lichtauskoppelelementen angeordnet ist.

8. Sensoreinrichtung nach einem der vorstehenden Ansprüche,
**dadurch gekennzeichnet, daß**
das Lichteinkoppelelement (1A) und das Lichtauskoppelelement (10A) des ersten Sender/Empfänger-Paares (1, 10) gemeinsam mit dem Lichteinkoppelelement (3A) oder dem Lichtauskoppelelement (30A) des zusätzlichen Sender-/Empfänger-Paares (3, 30) einstückig ausgebildet ist, wobei das Lichteinkoppelelement oder das Lichtauskoppelelement des zusätzlichen Sender-/Empfänger-Paares zwischen dem Lichteinkoppelelement (1A) und dem Lichtauskoppelelement (10A) des ersten Sender-/Empfänger-Paares (1, 10) angeordnet ist.

9. Sensoreinrichtung nach einem der vorstehenden Ansprüche,
**dadurch gekennzeichnet, daß**
das Lichteinkoppelelement (2A) und das Lichtauskoppelelement (20A) des zweiten Sender/Empfänger-Paares (2, 20) gemeinsam mit dem Lichtauskoppelelement (3A) oder dem Lichteinkoppelelement (30A) des zusätzlichen Sender-/Empfänger-Paares (3, 30) einstückig ausgebildet ist, wobei das Lichteinkoppelelement oder das Lichtauskoppelelement des zusätzlichen Sender-/Empfänger-Paares zwischen dem Lichteinkoppelelement (2A) und dem Lichtauskoppelelement ((20A) des zweiten Sender-/Empfänger-Paares (2, 20) angeordnet ist.

10. Sensoreinrichtung nach einem der vorstehenden Ansprüche,
**dadurch gekennzeichnet, daß**
dasselbe ein zylinderförmiges Gehäuseteil (9) aufweist, dessen Stirnwandung an die Scheibe (5) angekoppelt wird, wobei die Lichteinkoppelelemente und die Lichtauskoppelelemente für die Senderstrahlung sowie die Lichtleitelemente zur Detektion der Lichtverhältnisse außerhalb der Scheibe einstückig mit der Stirnwandung im Spritzgießverfahren ausgebildet sind.

11. Sensoreinrichtung nach Anspruch 10,
**dadurch gekennzeichnet, daß**
dieselbe eine vorzugsweise kreisförmige Leiterplatte (6) aufweist, auf der die Sender und Empfänger für die Senderstrahlung sowie die Lichtempfänger zur Detektion der Lichtverhältnisse außerhalb der Scheibe angeordnet sind, wobei die Leiterplatte so in dem zylinderförmigen Gehäuseteil (9) fixiert wird, daß die Sender und Empfänger sowie die Lichtempfänger positionsgenau zu den Lichteinkoppelelementen, den Lichtauskoppelelementen und den Lichtleitelementen angeordnet sind.

12. Sensoreinrichtung nach Anspruch 7 und 11,
**dadurch gekennzeichnet, daß**
das elektrische Bauelement (7) auf der der Scheibe (5) zugewandeten Seite der Leiterplatte (6) derart positioniert angeordnet ist, daß es zwischen den Lichtein- und Lichtauskoppelelementen liegt.
